# EUROPEAN PATENT SPECIFICATION

(11) **EP 2 776 883 B1**
(45) Date of publication and mention of the grant of the patent: **26.07.2017**
(21) Application number: 14701227.2
(22) Date of filing: 07.01.2014
(51) Int. Cl.: G02B 19/00, G02B 17/08, F21V 5/08, F21V 13/04

(54) **LIGHT GUIDE ELEMENT FOR MODIFYING THE LIGHT DISTRIBUTION PATTERN OF A LIGHT SOURCE**
LICHTLEITELEMENT ZUR VERÄNDERUNG DER LICHTVERTEILUNG EINER LICHTQUELLE
ÉLÉMENT GUIDE D'ONDE OPTIQUE POUR MODIFIER LA DISTRIBUTION DE LUMIÈRE D'UNE SOURCE LUMINEUSE

(30) Priority: 10.01.2013 FI 20135031
(43) Date of publication of application: 17.09.2014
(73) Proprietor: Ledil Oy, 24240 Salo (FI)
(72) Inventor: LAAKKIO, Olli-Pekka, 20520 Turku (FI)
(74) Representative: Berggren Oy, Helsinki & Oulu
(86) International application number: PCT/FI2014/050008
(87) International publication number: WO 2014/044926

(56) References cited:
- GB-A- 2 180 051
- US-A1- 2008 239 742
- US-A1- 2011 096 533
- US-A1- 2012 287 649
- US-A1- 2012 300 488
- US-A1- 2012 307 503

## Description

### Field of the invention

The invention relates generally to illuminating engineering. More particularly, the invention relates to a light guide element for modifying a light distribution pattern of a light source that can be, for example but not necessarily, a light emitting diode "LED".

### Background

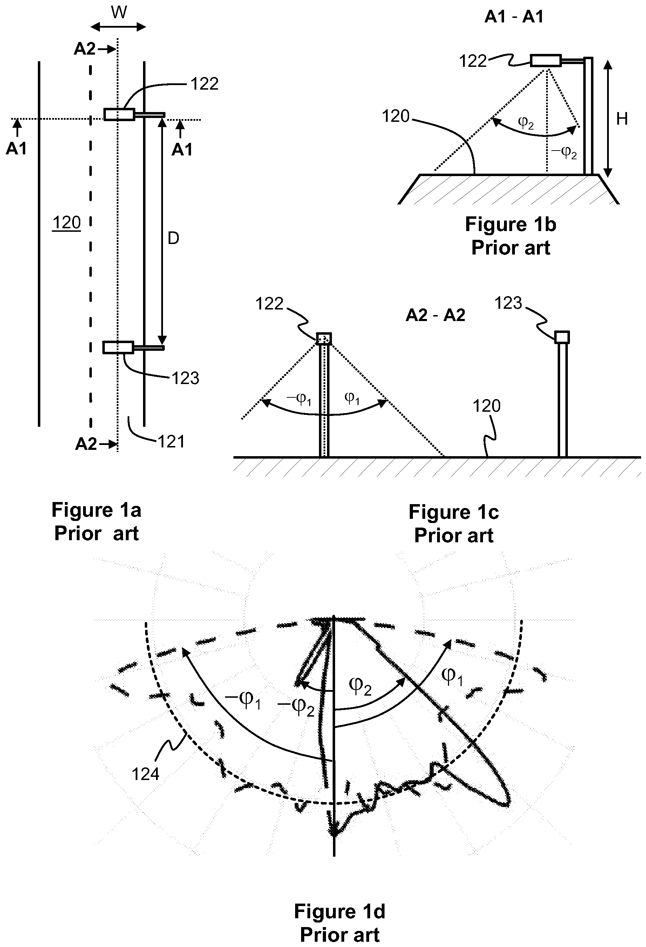

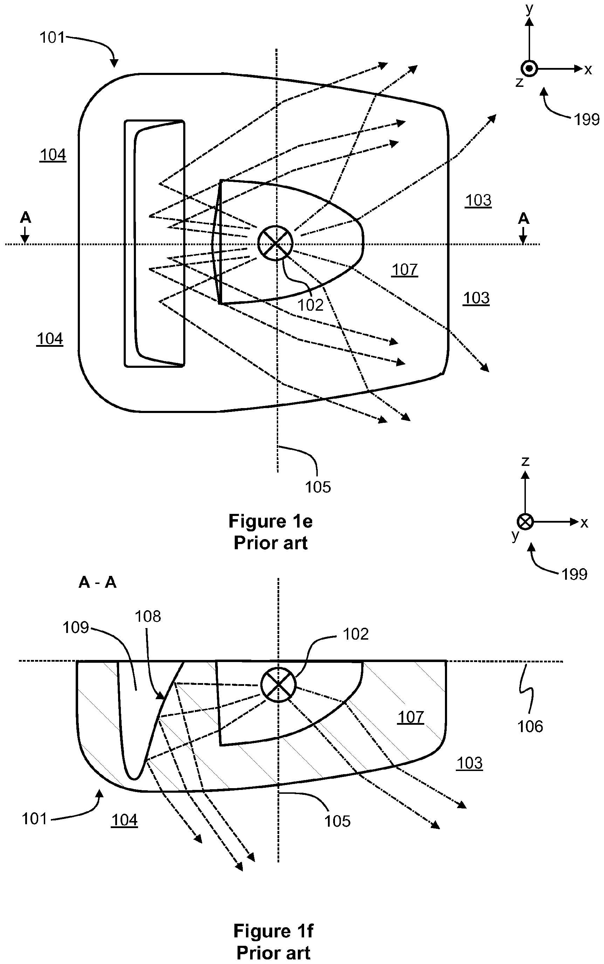

Distribution of light produced by a light source can be important or even critical in some applications. The light source can be, for example but not necessarily, a light emitting diode "LED", a filament lamp, or a gas-discharge lamp. Figure 1 a shows a schematic illustration of a street lighting application where streetlamps 122 and 123 are arranged to illuminate a road 120. Figure 1b shows a view of a section taken along the line A1 - A1 shown in figure 1 a, and figure 1c shows a view of a section taken along the line A2 - A2 shown in figure 1 a. Each of the streetlamps 122 and 123 may comprise, for example, an illuminator device that comprises a plurality of light sources, e.g. light emitting diodes "LED", and light guide elements each of which being arranged to modify the light distribution pattern of one or more of the light sources. An exemplifying light guide element 101 according to the prior art is illustrated in figures 1e and 1f where figure 1f shows a view of a section taken along the line A - A shown in figure 1 e. A light source 102 is arranged to radiate first light beams to a first quarter-space 103 and second light beams to a second quarter-space 104, where the first and second quarter-spaces are defined by mutually perpendicular spatial planes 105 and 106 so that the spatial plane 105 constitutes a planar boundary between the first and second quarter-spaces. In figures 1 e and 1 f, some of the first light beams are depicted with dot-and-dash line arrows and some of the second light beams are depicted with dashed line arrows. It is to be noted that the above-mentioned spatial planes 105 and 106 are mere geometrical concepts for illustrative purposes only but not physical elements of the light guide element 101 or of the light source 102. The spatial plane 105 is parallel with the yz-plane of a coordinate system 199 and the spatial plane 106 is parallel with the xy-plane of the coordinate system 199. The light guide element 101 comprises transparent material 107 on the route of the first light beams for modifying a light distribution pattern of the first light beams, where the refractive index of the transparent material is greater than unity. The light guide element 101 comprises a reflective surface 108 for reflecting the second light beams to the first quarter-space 103 as illustrated in figures 1e and 1f. The reflective surface 108 is a surface of a cavity 109. The geometrical forms of the cavity 109 and the refractive index of the transparent material 107 are selected so that the total reflection takes place on the reflective surface 108.

Figure 1d shows polar plots illustrating simulated luminance distributions on the surface of the road 120 when light guide elements of the kind described above are being used in an exemplifying situation where the distance D between the adjacent streetlamps is about 4.5 times the height H of streetlamp poles and the width W of a lane 121 is about a half of the height H of the streetlamp poles. The solid line polar plot shows the luminance distribution on the line A1 - A1 shown in figure 1 a and the dashed line polar plot shows the luminance distribution on the line A2-A2 that is on the middle of the lane 121. Angle ϕ₁ is defined in figure 1c and angle ϕ₂ is defined in figure 1b. An ideal situation would be such that the luminance is at a suitable level and uniform on the surface of the road. In figure 1d, a circle arc 124 illustrates a situation where the luminance is uniformly distributed.

It is inherent that it becomes more and more challenging to achieve a luminance distribution that is sufficiently uniform in the longitudinal direction of the road 120 when the distance D between adjacent streetlamps is increased. On the other hand, the costs of the street lighting can be reduced by increasing the distance D. Thus, there is a clear economic incentive to increase the distance D between adjacent streetlamps. Publications US2011096533, US2012/0287649 and US2012/0307503 describe a light guide element which works in the similar way as the light guide element illustrated in figures 1e and 1f. US20120300488 describes a light guide element with a reflective surface comprising mutually parallel grooves.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new light guide element for modifying the light distribution pattern of a light source radiating first light beams to a first quarter-space and second light beams to a second quarter-space, the first and second quarter-spaces being defined by mutually perpendicular spatial planes so that one of the spatial planes constitutes a planar boundary between the first and second quarter-spaces. A light guide element according to the invention comprises:
- transparent material on a route of the first light beams for modifying the light distribution pattern of the first light beams, a refractive index of the transparent material being greater than unity, and
- a reflective surface for reflecting at least a part of the second light beams to the first quarter-space.

The reflective surface comprises mutually parallel grooves for spreading the light distribution pattern of the second light beams in a direction of a section line between the spatial planes, the grooves being substantially perpendicular to the section line. The physical structure of the light guide element is such that the light guide element comprises a transparent piece comprising a first cavity for the light source and a second cavity whose surface constitutes the reflective surface so that a total reflection takes place when the second light beams arrive, from inside the transparent piece, at the surface of the second cavity. The fact that the light distribution pattern of the second light beams is spread by the grooves in the above-described way facilitates achieving, for example, a sufficiently uniform distribution of luminance in the longitudinal direction of a road when the above-described light guide element is used in a street lighting application.

In accordance with the invention, there is provided also a new illuminator device comprising at least one light source and at least one light guide element according to the invention. The at least one light source may comprise, for example, one or more light emitting diodes "LED".

In accordance with the invention, there is provided also a new system comprising a road and at least one streetlamp comprising at least one illumination device according to the invention, wherein the grooves of the one or more light guide elements of the at least one illumination device are substantially perpendicular to the longitudinal direction of the road.

A light guide element according to an exemplifying and non-limiting embodiment of the invention is a single piece of transparent material that can be manufactured, for example, by mold casting. In accordance with the invention, there is provided also a new mold having a form suitable for manufacturing, by mold casting, the above-mentioned single piece of the transparent material.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in depending claims are mutually freely combinable unless otherwise explicitly stated.

### Brief description of the figures

The exemplifying and non-limiting embodiments of the invention and their advantages are explained in greater detail below with reference to the accompanying drawings, in which:
figures 1 a, 1 b, and 1 c shows a schematic illustration of a street lighting application according to the prior art,
figure 1d shows polar plots illustrating simulated luminance distributions on the surface of a road shown in figures 1a-1c when light guide elements according to the prior art are being used,
figures 1 e and 1 f illustrate a light guide element according to the prior art,
figures 2a and 2b illustrate a light guide element according to an exemplifying embodiment of the invention,
figures 3a and 3b illustrate a light guide element according to a comparative embodiment.
figures 4a, 4b, 4c, 4d, and 4e illustrate groove profiles that are applicable in light guide elements according to exemplifying embodiments of the invention,
figures 5a and 5b illustrate an illuminator device according to an exemplifying embodiment of the invention,
figures 6a, 6b, and 6c shows a schematic illustration of a street lighting application employing an illuminator device according to an exemplifying embodiment of the invention, and
figure 6d shows polar plots illustrating simulated luminance distributions on the surface of a road shown in figures 6a-6c when light guide elements according to an exemplifying embodiment of the invention are being used.
Figures 1a-1f have already been explained in the Background-section of this document.

### Description of exemplifying embodiments

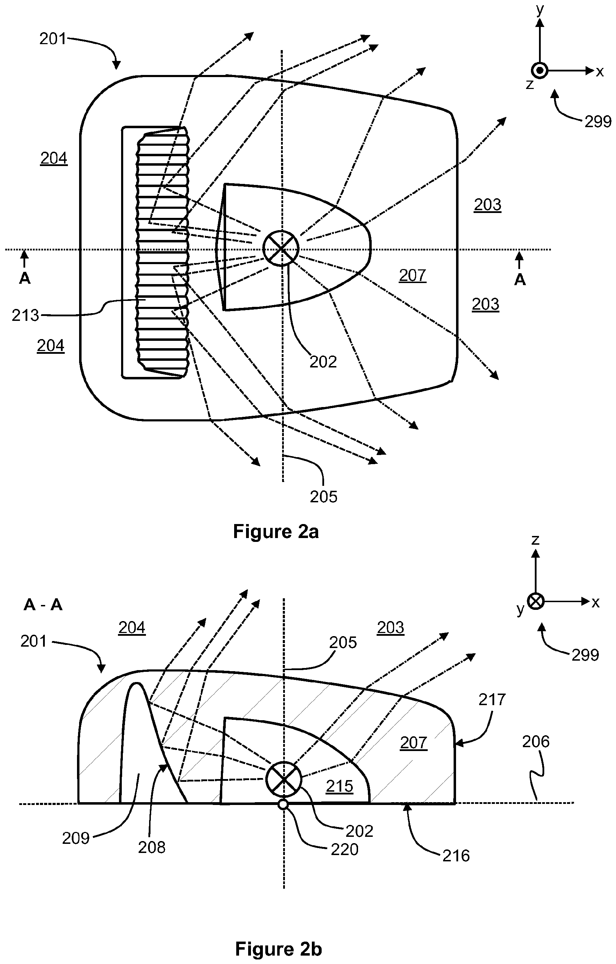

Figures 2a and 2b illustrate a light guide element 201 according to an exemplifying embodiment of the invention for modifying the light distribution pattern of a light source 202 that can be, for example but not necessarily, a light emitting diode "LED", a filament lamp, or a gas-discharge lamp. Figure 2b shows a view of a section taken along the line A - A shown in figure 2a. The light source 202 is arranged to radiate first light beams to a first quarter-space 203 and second light beams to a second quarter-space 204, where the first and second quarter-spaces are defined by mutually perpendicular spatial planes 205 and 206 so that the spatial plane 205 constitutes a planar boundary between the first and second quarter-spaces. In figures 2a and 2b, some of the first light beams are depicted with dot-and-dash line arrows and some of the second light beams are depicted with dashed line arrows. It is to be noted that the above-mentioned spatial planes 205 and 206 are mere geometrical concepts for illustrative purposes only but not physical elements of the light guide element 201 or of the light source 202. The spatial plane 205 is parallel with the yz-plane of a coordinate system 299 and the spatial plane 206 is parallel with the xy-plane of the coordinate system 299.

The light guide element 201 comprises transparent material 207 on the route of the first light beams for modifying the light distribution pattern of the first light beams, where the refractive index of the transparent material is greater than unity. The transparent material can be, for example, acrylic plastic or glass. The light guide element 201 comprises a reflective surface 208 for reflecting at least a part of the second light beams to the first quarter-space 203 as illustrated in figures 2a and 2b. In addition to the second light beams, the light source 202 may radiate, to the second quarter-space 204, such light beams that do not fall on the reflective surface 208. A surface of solid material on a route of the second light beams comprises mutually parallel grooves 213 for spreading the light distribution pattern of the second light beams in a direction of a section line 220 between the spatial planes 205 and 206. The grooves 213 are substantially perpendicular to the section line 220. In the exemplifying case illustrated in figures 2a and 2b, the grooves 213 are on the reflective surface 208. It is to be noted that the section line 220 is mere geometrical concept for illustrative purposes only but not a physical element of the light guide element 201 or of the light source 202. The section line 220 is parallel with the y-axis of the coordinate system 299. Thus, the grooves 213 on the reflective surface 208 spread the light distribution pattern of the second light beams in the positive and negative y-directions of the coordinate system 299.

In the exemplifying case illustrated in figures 2a and 2b, the light guide element 201 is a single piece of transparent material 207. The piece of transparent material comprises a first cavity 215 for the light source 202 as illustrated in figure 2b and a second cavity 209 whose surface constitutes the reflective surface 208 so that a total reflection takes place, as illustrated in figure 2b, when the second light beams arrive, from inside the transparent material, at the reflective surface 208 of the second cavity 209. The first and second cavities 215 and 209 are formed so that a first surface 216 of the piece of transparent material comprises pits constituting the first and second cavities and the first surface 216 is substantially planar on regions surrounding the pits, and a second surface 217 of the piece of transparent material has a convex shape surrounding the first and second cavities. The first surface 216 can be installed, for example, against a circuit board where the light source 202 is mounted on a surface of the circuit board. The piece of transparent material constituting the light guide element 201 can be made of, for example, acrylic plastic, polycarbonate, optical silicone, or glass. The method of manufacture can be for example mold casting.

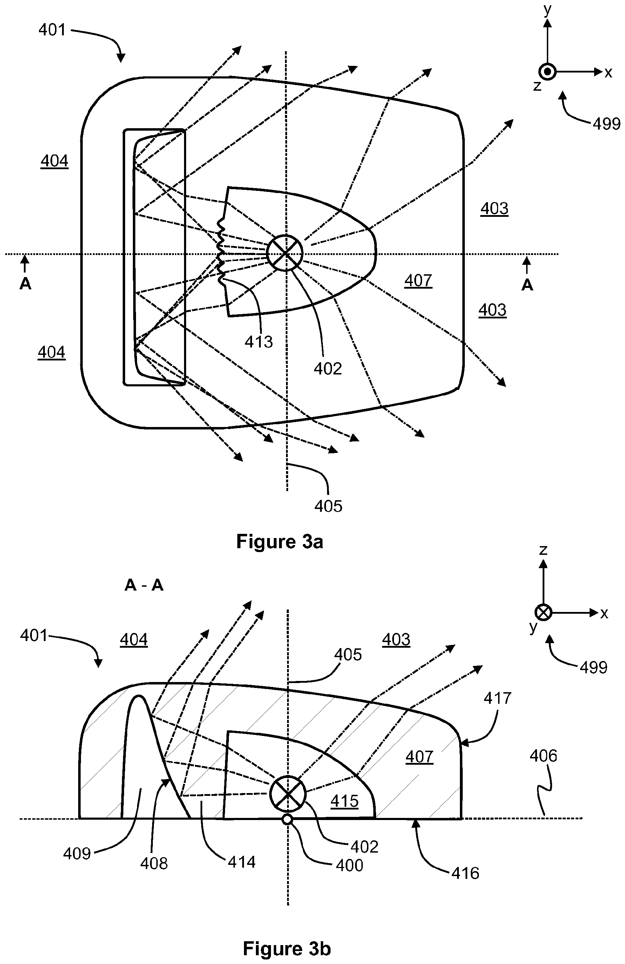

Figures 3a and 3b illustrate a light guide element 401 according to an exemplifying embodiment of the invention for modifying the light distribution pattern of a light source 402. Figure 3b shows a view of a section taken along the line A - A shown in figure 3a. The light source 402 is arranged to radiate first light beams to a first quarter-space 403 and second light beams to a second quarter-space 404, where the first and second quarter-spaces are defined by mutually perpendicular spatial planes 405 and 406 so that the spatial plane 405 constitutes a planar boundary between the first and second quarter-spaces. In figures 3a and 3b, some of the first light beams are depicted with dot-and-dash line arrows and some of the second light beams are depicted with dashed line arrows. The light guide element 401 comprises transparent material 407 on the route of the first light beams for modifying the light distribution pattern of the first light beams, where the refractive index of the transparent material is greater than unity. The light guide element 401 comprises a reflective surface 408 for reflecting at least a part of the second light beams to the first quarter-space 403 as illustrated in figures 3a and 3b. In addition to the second light beams, the light source 402 may radiate, to the second quarter-space 404, such light beams that do not fall on the reflective surface 408. The light guide element comprises mutually parallel grooves 413 on a surface of a wall 414 of transparent material as illustrated in figure 3a. The wall 414 of transparent material is on the route of the second light beams before the reflective surface 408 as illustrated in figures 3a and 3b. The grooves 413 are arranged to spread, in the positive and negative y-directions of a coordinate system 499, the light distribution pattern of the second light beams falling on the reflective surface 408. It is also possible that there are grooves both on the surface of the wall 414 of transparent material and on the reflective surface 408.

Advantageously, only a middle region of the wall 414 of transparent material is provided with the grooves 413 and the flank regions on both sides of the middle region are free from grooves as illustrated in figure 3a. In this case, the light distribution pattern of only those of the second light beams that penetrate the middle region is spread by the grooves. Providing only the middle region with the light spreading grooves 413 reduces the risk that the light distribution pattern of the second light beams is spread so much that too big a portion of the second light beams does not fall on the reflective surface 408.

In the exemplifying case illustrated in figures 3a and 3b, the light guide element 401 is a single piece of transparent material 407. The piece of transparent material comprises a first cavity 415 for the light source 402 as illustrated in figure 3b and a second cavity 409 whose surface constitutes the reflective surface 408 so that a total reflection takes place, as illustrated in figure 3b, when the second light beams arrive, from inside the transparent material, at the reflective surface 408 of the second cavity 409. The first and second cavities 415 and 409 are formed so that a first surface 416 of the piece of transparent material comprises pits constituting the first and second cavities and the first surface 416 is substantially planar on regions surrounding the pits, and a second surface 417 of the piece of transparent material has a convex shape surrounding the first and second cavities.

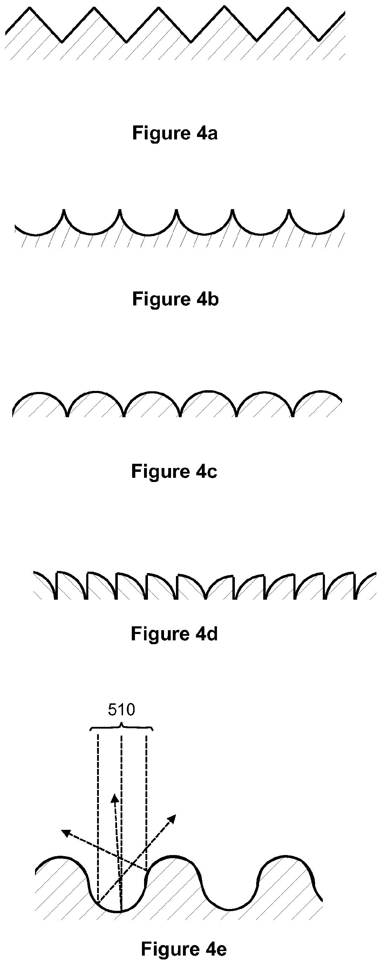

Figures 4a, 4b, 4c, 4d, and 4e illustrate groove profiles that are applicable in light guide elements according to exemplifying embodiments of the invention. Figure 4a illustrates a case where the grooves have a V-shaped profile. Figure 4b illustrates a case where the grooves have a concave U-shaped profile. Figure 4c illustrates a case where the ridges between adjacent grooves have a convex U-shaped profile. Figure 4d illustrates a case where the ridges between adjacent grooves have a quarter-circle profile. Figure 4e illustrates a case where the grooves have a concave U-shaped profile and the ridges between adjacent grooves have a convex U-shaped profile. Furthermore, Figure 4e illustrates how grooves spread mutually parallel incident light beams 510. Advantageously, in cases where the reflective surface is provided with the light spreading grooves, the grooves are designed and the reflective surface is positioned with respect to incident light beams so that each of the light beams is reflected only once at the reflective surface so as to minimize reflection losses. Optical designs which fulfill this condition can be found with the aid of simulations.

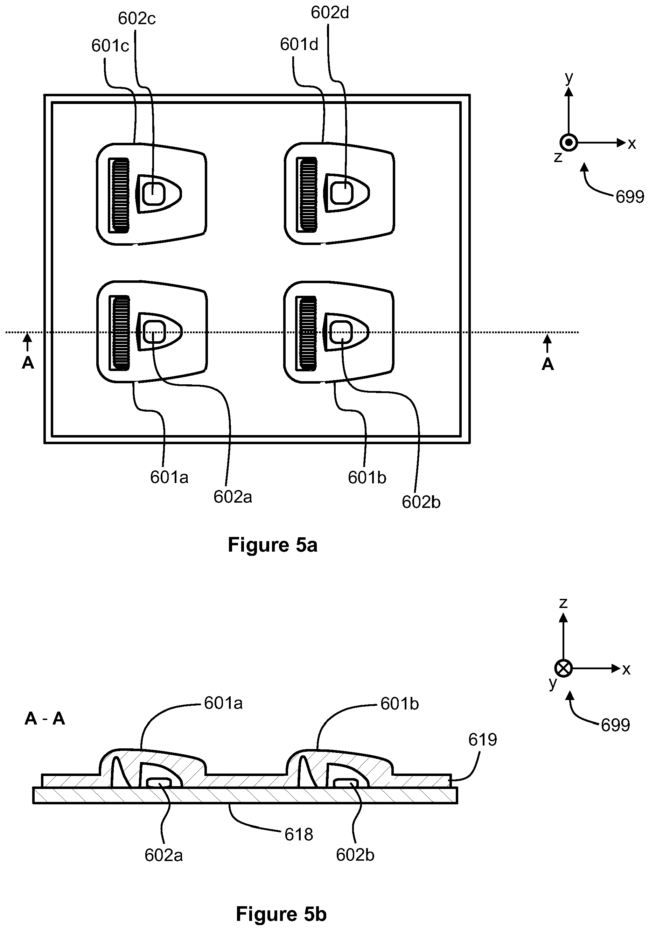

Figures 5a and 5b illustrate an illuminator device according to an exemplifying embodiment of the invention. The illuminator device comprises light sources 602a, 602b, 602c and 602d, and light guide elements 601 a, 601 b, 601 c and 601 d. Each of the light guide elements is according to an embodiment of the invention. The light guide elements 601a-601d can be, for example, such as illustrated in figures 2a and 2b. Each of the light sources 602a-602d may comprise at least one light emitting diode "LED". In the exemplifying case illustrated in figures 5a and 5b, the illuminator device further comprises a circuit board 618. The light guide elements 601a-601d are parts of a single piece 619 of transparent material and the light guide elements 601a-601d are mutually parallel. The light sources 602a-602d are located on a surface of the circuit board 618 and in cavities of the light guide elements 601a-601d as illustrated in figure 5b.

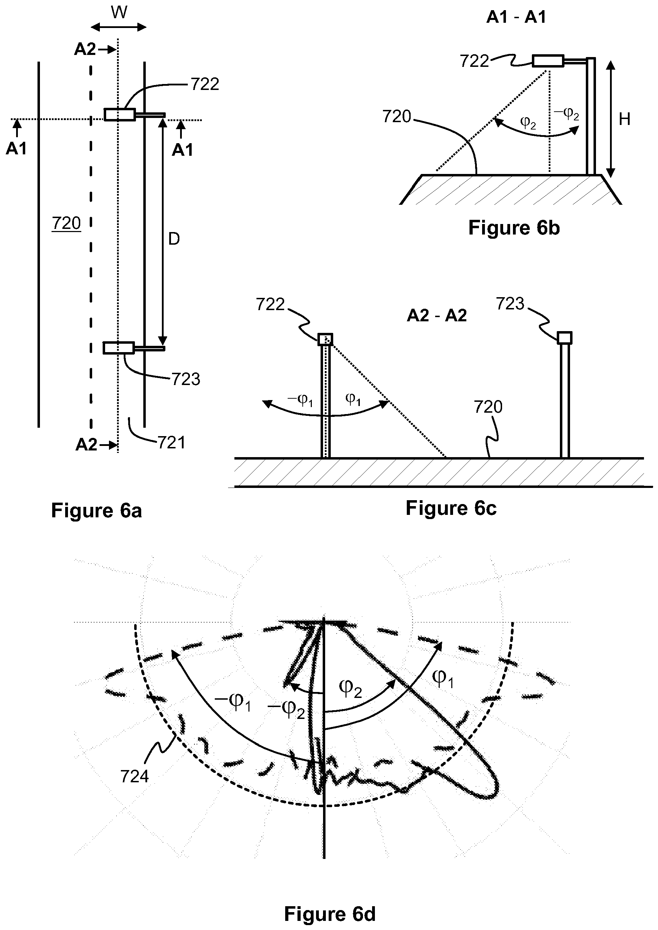

Figure 6a shows a schematic illustration of a street lighting application where streetlamps 722 and 723 are arranged to illuminate a road 720. Figure 6b shows a view of a section taken along the line A1 - A1 shown in figure 6a, and figure 6c shows a view of a section taken along the line A2 - A2 shown in figure 6a. Each of the streetlamps 722 and 723 comprises one or more illuminator devices each of which comprises one or more light sources, e.g. light emitting diodes "LED", and one or more light guide elements each of which being arranged to modify the light distribution pattern of one light source. Each light guide element can be according to what is illustrated in figures 2a and 2b, or in comparative embodiments as figures 3a and 3b. The light spreading grooves of the one or more light guide elements are substantially perpendicular to the longitudinal direction of the road 720.

Figure 6d shows polar plots illustrating simulated luminance distributions on the surface of the road 720 when light guide elements of the kind illustrated in figures 2a and 2b are being used in a similar exemplifying situation as in conjunction with figure 1d where the distance D between the adjacent streetlamps is about 4.5 times the height H of streetlamp poles and the width W of a lane 721 is about a half of the height H of the streetlamp poles. The solid line polar plot shows the luminance distribution on the line A1 - A1 shown in figure 6a and the dashed line polar plot shows the luminance distribution on the line A2-A2 that is on the middle of the lane 721. Angle ϕ₁ is defined in figure 6c and angle ϕ₂ is defined in figure 6b. An ideal situation would be such that the luminance is at a suitable level and uniform on the surface of the road. In figure 6d, a circle arc 724 illustrates a situation where the luminance is uniformly distributed. As can be seen, the dashed line polar plot of figure 6d does not have such depressions on the ranges ϕ₁ = 45°...60° and ϕ₁ = - 45°...- 60° as does the dashed line polar plot of figure 1d. Hence, the light spreading grooves of the one or more light guide elements facilitate achieving a sufficiently uniform distribution of luminance in the longitudinal direction of the road.

The specific examples provided in the description given above should not be construed as limiting the scope and/or the applicability of the appended claims. In the above-presented examples, the mutually parallel grooves for spreading light are on or before the reflective surface on the route of the light beams that are reflected by the reflective surface, the latter variant not forming part of the present invention. However, in some cases, which do not form part of the present invention, the mutually parallel grooves could be on a surface that is after the reflective surface on the route of the light beams that are reflected.

## Claims

1. A light guide element (201) for modifying a light distribution pattern of a light source radiating first light beams to a first quarter-space and second light beams to a second quarter-space, the first and second quarter-spaces being defined by mutually perpendicular spatial planes so that one of the spatial planes constitutes a planar boundary between the first and second quarter-spaces, the light guide element comprising:
- transparent material (207) on a route of the first light beams for modifying a light distribution pattern of the first light beams, a refractive index of the transparent material being greater than unity, and
- a reflective surface (208) for reflecting at least a part of the second light beams to the first quarter-space,
wherein the reflective surface comprises mutually parallel grooves (213) for spreading a light distribution pattern of the second light beams in a direction of a section line between the spatial planes, the grooves being substantially perpendicular to the section line, wherein the light guide element comprises a transparent piece comprising a first cavity (215) for the light source and a second cavity (209) whose surface constitutes the reflective surface (208) so that a total reflection takes place when the second light beams arrive, from inside the transparent piece, at the surface of the second cavity.

2. A light guide element according to claim 1, wherein a first surface (216) of the transparent piece comprises pits constituting the first and second cavities (215, 209) and is substantially planar on regions surrounding the pits, and a second surface (217) of the transparent piece has a convex shape surrounding the first and second cavities.

3. A light guide element according to claim 1 or 2, wherein the transparent piece is made of one of the following: acrylic plastic, polycarbonate, optical silicone.

4. A light guide element according to any of claims 1-3, wherein the grooves have a V-shaped profile.

5. A light guide element according to any of claims 1-3, wherein the grooves have a concave U-shaped profile.

6. A light guide element according to any of claims 1-3, wherein ridges between adjacent grooves have a convex U-shaped profile.

7. An illuminator device comprising a light source (602) and a light guide element (601 a) according to any of claims 1-6.

8. An illuminator device according to claim 7, wherein the illuminator device further comprises a circuit board (618) and the light guide element is according to claim 2, the planar regions of the first surface of the transparent piece being against the circuit board and the light source being in the first cavity.

9. An illuminator device according to claim 8, wherein the illuminator device comprises a plurality of light guide elements according to claim 2 and a plurality of light sources, the light guide elements being parts of a single piece (619) of the transparent material and the light guide elements being mutually parallel.

10. A mold having a form suitable for manufacturing, by mold casting, the transparent piece of the light guide element according to any of claims 1-6.

11. A system comprising a road (720) and a streetlamp (722, 723) comprising at least one illumination device according to any of claims 7-9, wherein the grooves of the one or more light guide elements of the at least one illumination device are substantially perpendicular to a longitudinal direction of the road.

## Patentansprüche

1. Lichtleitelement (201) zum Modifizieren eines Lichtverteilungsmusters einer Lichtquelle, die erste Lichtstrahlen in einen ersten Viertelraum und zweite Lichtstrahlen in einen zweiten Viertelraum ausstrahlt, wobei der erste Viertelraum und der zweite Viertelraum definiert sind durch zueinander senkrechte räumliche Ebenen derart, dass eine der räumlichen Ebenen eine ebene Grenze zwischen dem ersten und dem zweiten Viertelraum bildet, wobei das Lichtleitelement umfasst:
- transparentes Material (207) auf einem Weg der ersten Lichtstrahlen zum Modifizieren eines Lichtverteilungsmuster der ersten Lichtstrahlen, wobei eine Brechzahl des transparenten Materials größer als eins ist, und
- eine reflektierende Fläche (208) zum Reflektieren mindestens eines Teils der zweiten Lichtstrahlen in den ersten Viertelraum,
wobei die reflektierende Fläche zueinander parallele Rillen (213) zum Streuen eines Lichtverteilungsmusters der zweiten Lichtstrahlen in eine Richtung einer Schnittlinie zwischen den räumlichen Ebenen aufweist, wobei die Rillen im Wesentlichen senkrecht zu der Schnittlinie sind,
wobei das Lichtleitelement umfasst:
ein transparentes Teil, welches einen ersten Hohlraum (215) für die Lichtquelle und einen zweiten Hohlraum (209) aufweist, dessen Oberfläche die reflektierende Fläche (208) derart bildet, dass Totalreflexion eintritt, wenn die zweiten Lichtstrahlen von innerhalb des transparenten Teils auf die Oberfläche des zweiten Hohlraums einfallen.

2. Lichtleitelement nach Anspruch 1, wobei eine erste Fläche (216) des transparenten Teils Vertiefungen umfasst, welche den ersten und den zweiten Hohlraum (215, 209) bilden, und in Bereichen um die Vertiefungen herum im Wesentlichen eben ist, und eine zweite Fläche (217) des transparenten Teils eine konvexe Form aufweist, welche den ersten und den zweiten Hohlraum umgibt.

3. Lichtleitelement nach Anspruch 1 oder 2, wobei das transparente Teil aus einem der Folgenden hergestellt ist: Akrylkunststoff, Polykarbonat, optisches Silikon.

4. Lichtleitelement nach einem der Ansprüche 1 bis 3, wobei die Rillen ein V-förmiges Profil aufweisen.

5. Lichtleitelement nach einem der Ansprüche 1 bis 3, wobei die Rillen ein konkaves U-förmiges Profil aufweisen.

6. Lichtleitelement nach einem der Ansprüche 1 bis 3, wobei Kämme zwischen benachbarten Rillen ein konvexes U-förmiges Profil aufweisen.

7. Beleuchtungsvorrichtung, die eine Lichtquelle (602) und ein Lichtleitelement (601a) nach einem der Ansprüche 1 bis 6 umfasst.

8. Beleuchtungsvorrichtung nach Anspruch 7, ferner mit einer Leiterplatte (618) und mit dem Lichtleitelement nach Anspruch 2, wobei die ebenen Bereiche der ersten Fläche des transparenten Teils an der Leiterplatte anliegen und die Lichtquelle in dem ersten Hohlraum ist.

9. Beleuchtungsvorrichtung nach Anspruch 8, wobei die Beleuchtungsvorrichtung mehrere Lichtleitelemente nach Anspruch 2 und mehrere Lichtquellen umfasst, wobei die Lichtleitelemente Teile eines einzelnen Teils (619) des transparenten Materials sind und die Lichtleitelemente zueinander parallel sind.

10. Gussform mit einer zum Herstellen des transparenten Teils des Lichtleitelements nach einem der Ansprüche 1 bis 6 durch Formgießen geeigneten Form.

11. System umfassend eine Straße (720) und eine Straßenlaterne (722, 723), welche mindestens eine Beleuchtungsvorrichtung nach einem der Ansprüche 7 bis 9 umfasst, wobei die Rillen des einen oder der mehreren Lichtleitelemente der mindestens einen Beleuchtungsvorrichtung im Wesentlichen senkrecht zu einer Längsrichtung der Straße sind.

## Revendications

1. Elément de guide de lumière (201) pour modifier un schéma de distribution de lumière d'une source de lumière émettant des premiers faisceaux de lumière sur un premier quart d'espace et des seconds faisceaux de lumière sur un second quart d'espace, les premier et second quarts d'espace étant définis par des plans spatiaux mutuellement perpendiculaires de sorte que l'un des plans spatiaux constitue une limite plane entre les premier et second quarts d'espace, l'élément de guide de lumière comprenant :
- un matériau transparent (207) sur un trajet des premiers faisceaux de lumière pour modifier un schéma de distribution de lumière des premiers faisceaux de lumière, un indice de réfraction du matériau transparent étant supérieur à l'unité, et
- une surface réfléchissante (208) pour réfléchir au moins une partie des seconds faisceaux de lumière sur le premier quart d'espace,
dans lequel la surface réfléchissante comprend des rainures mutuellement parallèles (213) pour propager un schéma de distribution de lumière des seconds faisceaux de lumière dans une direction d'une ligne de coupe entre les plans spatiaux, les rainures étant sensiblement perpendiculaires à la ligne de coupe, dans lequel l'élément de guide de lumière comprend un morceau transparent comprenant une première cavité (215) pour la source de lumière et une seconde cavité (209) dont la surface constitue la surface réfléchissante (208) de sorte qu'une réflexion totale ait lieu lorsque les seconds faisceaux de lumière arrivent, depuis l'intérieur du morceau transparent, à la surface de la seconde cavité.

2. Elément de guide de lumière selon la revendication 1, dans lequel une première surface (216) du morceau transparent comprend des piqûres constituant les première et seconde cavités (215, 209) et est sensiblement plane sur des régions entourant les piqûres, et une seconde surface (217) du morceau transparent a une forme convexe entourant les première et seconde cavités.

3. Elément de guide de lumière selon la revendication 1 ou 2, dans lequel le morceau transparent est constitué de l'un des éléments suivants : plastique acrylique, polycarbonate, silicone optique.

4. Elément de guide de lumière selon l'une quelconque des revendications 1 à 3, dans lequel les rainures ont un profil en forme de V.

5. Elément de guide de lumière selon l'une quelconque des revendications 1 à 3, dans lequel les rainures ont un profil en forme de U concave.

6. Elément de guide de lumière selon l'une quelconque des revendications 1 à 3, dans lequel des crêtes entre des rainures adjacentes ont un profil en forme de U convexe.

7. Dispositif illuminateur comprenant une source de lumière (602) et un élément de guide de lumière (601a) selon l'une quelconque des revendications 1 à 6.

8. Dispositif illuminateur selon la revendication 7, dans lequel le dispositif illuminateur comprend en outre une carte de circuit imprimé (618) et l'élément de guide de lumière est selon la revendication 2, les régions planes de la première surface du morceau transparent se trouvant contre la carte de circuit imprimé et la source de lumière se trouvant dans la première cavité.

9. Dispositif illuminateur selon la revendication 8, dans lequel le dispositif illuminateur comprend une pluralité d'éléments de guide de lumière selon la revendication 2 et une pluralité de sources de lumière, les éléments de guide de lumière étant des parties d'un seul morceau (619) du matériau transparent et les éléments de guide de lumière étant mutuellement parallèles.

10. Moule ayant une forme adaptée pour fabriquer, par coulée en moule, le morceau transparent de l'élément de guide de lumière selon l'une quelconque des revendications 1 à 6.

11. Système comprenant une route (720) et un réverbère (722, 723) comprenant au moins un dispositif d'illumination selon l'une quelconque des revendications 7 à 9, dans lequel les rainures des un ou plusieurs éléments de guide de lumière du au moins un dispositif d'illumination sont sensiblement perpendiculaires à une direction longitudinale de la route.
